# EUROPEAN PATENT SPECIFICATION

(11) **EP 3 826 471 B1**
(45) Date of publication and mention of the grant of the patent: **02.12.2026**
(21) Application number: 19842171.1
(22) Date of filing: 25.07.2019
(51) Int. Cl.: A23G 4/18, A23G 4/04, A23G 4/06, A23G 4/10

(54) **PROCESS FOR REDUCING TEMPERING TIME FOR DEPOSITED CONFECTIONERY PRODUCTS**
VERFAHREN ZUR VERKÜRZUNG DER HÄRTUNGSZEIT FÜR ABGELAGERTE KONFEKTPRODUKTE
PROCÉDÉ POUR RÉDUIRE LE TEMPS DE TREMPE DE PRODUITS DE CONFISERIE DÉPOSÉS

(30) Priority: 26.07.2018 US 201862703533 P
(43) Date of publication of application: 02.06.2021
(73) Proprietor: Wm. Wrigley Jr. Company, Chicago, IL 60642 (US)
(72) Inventor: LIU, Jingping, Chicago, IL 60642 (US)
(74) Representative: Haseltine Lake Kempner LLP
(86) International application number: PCT/US2019/043449
(87) International publication number: WO 2020/023753

(56) References cited:
- EP-B1- 0 627 886
- EP-B1- 0 633 729
- EP-B1- 0 633 729
- EP-B1- 2 548 452
- WO-A1-2017/184926
- WO-A1-2018/140798
- US-A1- 2008 166 449
- US-A1- 2015 201 644
- US-A1- 2015 264 958
- US-A1- 2017 156 365

## Description

### BACKGROUND OF THE INVENTION

The present invention relates to a method of producing a chewing gum.

Chewing gums have been enjoyed by consumers for over a century because they provide flavor and refreshment over an extended time period and satisfy a human urge to chew. A number of forms of chewing gum have been marketed, but the most popular are sticks, tabs and coated pellets. These forms have the advantage of being easily produced in commercial quantities using highspeed forming equipment. However, they can only produce products with limited variations in shape. They cannot produce complex, three dimensional shapes, for example, of animals, fruits or other objects.

Traditional chewing gum forms, such as sticks and tabs, often require a period of tempering, such as 24 to 72 hours at ambient conditions to allow the gum to 'set up' and become firm enough for wrapping and packaging. It is known to chill the gum to accelerate this tempering.
**A.** EP0627886B1 discloses a process for manufacturing wax-free chewing gums with improved processability and chewing texture. WO2017/184926A1 discloses a tempered xylitol coating and method for applying it to a gum. US2015/0264958A1 discloses a method of forming a chewing gum including a filled, extruded body comprising sorbitol, to form a crunchy filling on cooling. US2015/0201644A1 discloses chewing gum compositions comprising a chewy cooked candy ingredient for improved flavor release. EP2548452B1 discloses confectionery composition including an elastomeric component and a saccharide component.

Consumers are constantly looking for new confectionery experiences. Products having three dimensional shapes are attractive and offer opportunities to manufacture products relevant to seasonal or special events. There have been past attempts to mold chewing gums into three dimensional shapes, but such efforts are not known to have ever resulted in commercial products.

It has been proposed that a novel consumer product could be prepared by depositing molten gum into a preformed sheet of packaging film which would act as a mold to shape the deposited gum piece. This could be done as a 'so-called' blister pack in which a sheet including a plurality of blister molds is covered with a lidding material (typically a foil or a foil laminate) and then typically further packaged.

One problem with molten gum processing is that the products can take a long time to temper, that is, to reach a final, stable texture after forming. While the product may be subjected to further processing, such as conveying and further packaging, after a few minutes of cooling, it may not reach its final, intended texture until weeks or even months after cooling to ambient temperatures (i.e. about 20 °C). Long tempering times may result in the product reaching the consumer before it has tempered and therefor may not provide the optimal intended texture. For example, it may be too soft and/or lack cohesion. In addition, if the chewing gum is deposited into a blister of a blister pack, it may be difficult or impossible to cleanly remove the piece from the blister mold without the composition adhering to the mold or distorting as it is removed.

Attempts to reformulate gums to reduce tempering time are likely to lead to products which lack the proper chewing texture or which have shelf stability or other problems.

What is needed is a method of making high quality deposited and molded chewing gums with relatively short tempering times.

### SUMMARY OF THE INVENTION

The present invention provides a method of producing a chewing gum product comprising the steps of;
a. preparing a chewing gum composition comprising at least a gum base, a flavor and at least two sugar alcohols,
b. melting and holding the chewing gum composition at a temperature sufficient to allow depositing the chewing gum composition,
c. depositing the molten chewing gum composition, wherein the surface onto which the molten chewing gum composition is deposited is a mold,
d. heat tempering the deposited chewing gum composition in the mold at a temperature of at least 25°C for a total tempering time that is reduced by at least 20% compared to tempering at 20°C, wherein the heat tempering is for at least 4 hours.

The heat tempering reduces the tempering time by at least 20% compared to tempering at 20°C. In some embodiments, the tempering time is reduced by at least 30%, or by at least 40%, or by at least 50%, or by at least 60%.

The chewing gum composition is heat tempered at a temperature of at least 25°C. In some embodiments, the chewing gum composition will be heat tempered at a temperature of at least 30°C. In some embodiments, the chewing gum composition will be heat tempered at a temperature of at least 35°C. In some embodiments, the chewing gum composition will be heat tempered at a temperature of at least 40°C. In some embodiments, the chewing gum composition will be heat tempered at a temperature within 5°C lower than the lowest melting point of saturated fats and/or microcrystalline waxes in the chewing gum base.

In some embodiments, the tempering occurs at a relative humidity of less than 50% or less than 35% or less than 20%.

The chewing gum composition will be heat tempered for at least 4 hours. In some embodiments, the chewing gum composition will be heat tempered for at least 6 hours. In some embodiments, the chewing gum composition will be heat tempered for at least 8 hours. In some embodiments, the chewing gum composition will be heat tempered for at least 12 hours. In some embodiments, the chewing gum composition will be heat tempered for at least 24 hours. In some embodiments, the chewing gum composition will be heat tempered for at least seven days.

In some embodiments, the chewing gum composition will be heat tempered for less than 10 days. In some embodiments, the chewing gum composition will be heat tempered for less than 48 hours. In some embodiments, the chewing gum composition will be heat tempered for less than 36 hours. In some embodiments, the chewing gum composition will be heat tempered for less than 24 hours. In some embodiments, the chewing gum composition will be heat tempered for less than 12 hours. In some embodiments, the chewing gum composition will be heat tempered for less than 8 hours. In some embodiments, the chewing gum composition will be heat tempered for less than 6 hours. In some embodiments, the chewing gum composition will be heat tempered for less than 5 hours.

In some embodiments, the chewing gum composition will be heat tempered for a period of between 4 hours and 24 hours. In some embodiments, the chewing gum composition will be heat tempered for a period of between 6 hours and 12 hours. In some embodiments, the chewing gum composition will be heat tempered for a period of between 36 hours and 48 hours. In some embodiments, the chewing gum composition will be heat tempered for a period of between 2 days and 7 days. In some embodiments, the chewing gum composition will be heat tempered for a period of between 7 days and 14 days. In some embodiments, the chewing gum composition will be heat tempered for a period of between 24 hours and 36 hours. In some embodiments, the chewing gum composition will be heat tempered for a period of between 12 hours and 24 hours. In some embodiments, the chewing gum composition will be heat tempered for a period of between 8 hours and 12 hours. In some embodiments, the chewing gum composition will be heat tempered for a period of between 6 hours and 8 hours.

In some embodiments, the chewing gum will be fully tempered after heat tempering. In some embodiments, the chewing gum will require additional tempering at ambient conditions after heat tempering. In some embodiments the additional tempering at ambient conditions will be less than three weeks or less than two weeks or less than one week. In some embodiments, the chewing gum will be tempered until the chewing gum piece can be demolded without distortion or deformation.

In some embodiments, the chewing gum composition would require at least four weeks of tempering at ambient conditions without the heat tempering step. In some embodiments, the chewing gum composition would require at least eight weeks of tempering at ambient conditions without the heat tempering step. In some embodiments, the chewing gum composition would require at least twelve weeks of tempering at ambient conditions without the heat tempering step.

In some embodiments, the gum composition will comprise two sugar alcohols. In some embodiments, the gum composition will comprise three sugar alcohols. In some embodiments, the gum composition will comprise at least one alcohols selected from the group consisting of sorbitol, maltitol, xylitol, mannitol, erythritol, isomalt and combinations thereof.

In some embodiments, the chewing gum compositions will comprise a sugar alcohol blend which is a binary blend of xylitol and sorbitol, or xylitol and isomalt, or sorbitol and isomalt with ratio in the range of 1:9 to 9:1, preferable ratio is in the range 1:3 to 3:1, most preferable in the range 1:2 to 2:1.

In some embodiments, the mold into which the chewing gum composition is deposited is part of the consumer packaging. In some embodiments, the chewing gum composition is deposited into the blister of a blister pack.

In some embodiments, the chewing gum composition further comprises at least one ingredient selected from the group consisting of high intensity sweeteners, encapsulated high intensity sweeteners, colors, emulsifiers, fillers, and nutritional supplements.

### BRIEF DESCRIPTION OF THE DRAWINGS

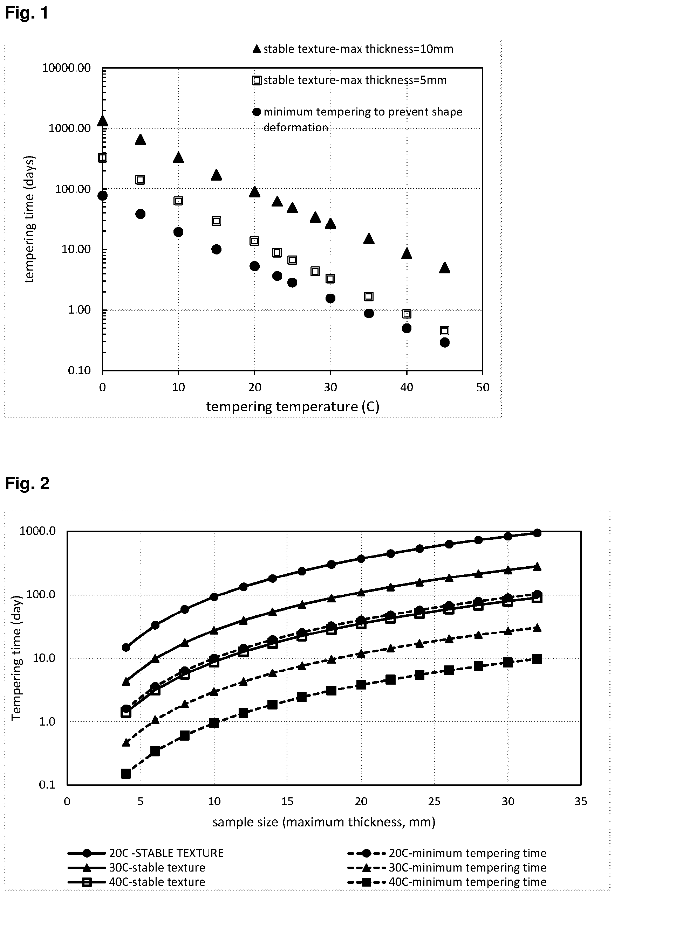

FIGURE 1 is a graph of tempering time vs. temperature for 5mm and 10mm thick chewing gum pieces and time to achieve minimum acceptable tempering.
FIGURE 2 is a graph shows tempering time at 20, 30 and 40°C to reach fully tempered and minimum acceptable tempered conditions.
FIGURE 3 is a graph of enthalpy of the chewing gum of Example 3 after tempering at ambient conditions for 0 to 60 days measured at the center and the surface of the piece.
FIGURE 4 is a graph of crust thickness of the chewing gum of Example 3 after tempering for 2 to 15 days at refrigerator, ambient and oven conditions.
FIGURE 5 is a graph comparing the crust thickness of the chewing gum of Example 2 after tempering for 2 and 7 days at refrigerator, ambient and oven conditions.
FIGURES 6A-C are photos of bisected chewing gum pieces of Example 3 showing crust formation after 7 days of tempering in refrigerator, ambient and oven conditions.

### DESCRIPTION OF THE INVENTION

**T**he present invention is based on the discovery that deposited molded chewing gum actually tempers faster when held at an elevated temperature. It is believed that the mechanism of tempering is the formation of large crystals in the gum mass. In order to form such large crystals, small crystals need to migrate within the gum mass to attach to larger crystals that have already formed (without being bound by theory). (The presence of gum base in the composition limits the temperature at which the composition can be melted due to potential degradation of gum base components.) The ability of the small crystals to migrate, and therefore the tempering speed, is dependent on the viscosity of the mass which, in turn, is dependent on temperature. Thus elevating the temperature of the deposited chewing gum reduces the required tempering time, contrary to what might be expected.

In general, the tempering time decreases logarithmically with temperature up to approximately the temperature of the melting point of saturated fats and/or microcrystalline waxes in the gum base. These fats and waxes typically melt in the range of 50 to 60°C. Thus the heat tempering temperature may be selected to be just below the melting point of the lowest melting fully hydrogenated fat or microcrystalline wax, for example 10°C lower or 5°C lower or 3°C lower or even 1°C lower than that temperature.

In practice, it is usually not necessary to completely temper the product prior to shipping. This is because the product will continue to temper as it travels through the distribution system. The important thing is that the product be completely or nearly completely tempered by the time the consumer receives it. At a minimum, the product should be sufficiently tempered at that time that it can be easily removed from the package mold without distorting the shape of the product or leaving any visible residue on the mold. The product should also be sufficiently close to its fully tempered texture that it will be acceptable and not noticeably different from the intended final temperature.

Thus the heat tempering can be discontinued and the product shipped when it will be fully tempered after tempering at ambient conditions for a period of time compatible with the speed of distribution, such as two weeks, three weeks, four weeks or six weeks.

The completeness of temper can be measured in several ways. A quick test is to simply remove the piece form the mold. A fully tempered product will be easily removable leaving no visible residue on the mold. The demolded piece will exhibit no distortion, deformation or cracks. Pieces that exhibit only minor cracking are close to being fully tempered.

Another method of determining degree of temper is to look at crust thickness. As the product tempers, a crust of tempered material starts to form on the outer surface of the piece and steadily thickens until the entire piece is tempered. This crust can be seen felt and measured by cutting the piece in half. A precise method for measuring the crust and thus determining progress in tempering using TMA is described in connection with testing the examples.

Chewing gums normally comprise a water insoluble gum base portions and a water soluble portion which includes sweeteners, flavors and other ingredients. Any chewing gum base and chewing gum formula may be used in the chewing gums.

The insoluble gum base typically may contain any combination of elastomers, vinyl polymers, elastomer plasticizers, fillers, softeners, waxes and other optional ingredients such as colorants and antioxidants. The variety of gum base ingredients typically used provide the ability to modify the chewing characteristics of gums made from the gum base.

Elastomers provide the rubbery, cohesive nature to the gum which varies depending on this ingredient's chemical structure and how it may be compounded with other ingredients. Natural elastomers may include natural rubber such as smoked or liquid latex and guayule, natural gums such as jelutong, lechi caspi perillo, massaranduba balata, massaranduba chocolate, nispero, rosidinha, chicle, gutta percha, gutta kataiu, niger gutta, tenu, chilte, chiquibul, gutta hang kang. Synthetic elastomers may include high molecular weight elastomers such as butadiene-styrene copolymers and isobutylene-isoprene copolymers. Other polymers which sometimes serve as elastomers include polybutadiene and polyisobutylene, vinyl polymers such as polyvinyl acetate, polyethylene, vinyl copolymeric elastomers such as vinyl acetate/vinyl laurate, vinyl acetate/vinyl stearate, ethylene/vinyl acetate, polyvinyl alcohol or mixtures thereof. These polymers perform best when used in combination with butadiene-styrene copolymers and isobutylene-isoprene copolymers.

Vinyl polymeric and copolymeric type elastomers provide tack resistance, vary the chew characteristics of gums made from these bases and offer hydrophilic properties beneficial to sensory perception of the final gums. For copolymeric types, the amount of vinyl laurate, vinyl stearate, or ethylene present in the vinyl laurate/vinyl acetate (VLNA), vinyl stearate/vinyl acetate (VSNA), or ethylene/vinyl acetate (EVA) copolymers respectively typically ranges from about 10 to about 60 percent by weight of the copolymer. Average molecular weights of these polymers may range from about 2,000 to about 80,000. Ball and ring softening points of these polymers may range from about to 50 to 120°C. Polyvinyl acetate having an average molecular weight from about 8,000 to about 52,000 are preferred for use in the gum base and gum of the present invention. More preferred for chewing gum bases are those of from about 10,000 to about 35,000 molecular weight, and for bubble gum bases, those having from about 30,000 to about 60,000 molecular weight. Vinyl polymers typically release flavor quickly, and using iso-alkanic waxes exhibiting small crystalline structure with these vinyl polymers extends flavor release.

Petroleum waxes aid in the curing of the finished gum made from the gum base as well as improve shelf-life and texture. Wax crystal size when hard also improves the release of flavor. Those waxes high in iso-alkanes have a smaller crystal size than those waxes high in normal-alkanes, especially those with normal-alkanes of carbon numbers less than 30. The smaller crystal size allows slower release of flavor since there is more hindrance of the flavor's escape from this wax versus a wax having larger crystal sizes.

Synthetic waxes are produced by means atypical of petroleum wax production. The synthetic waxes may include waxes containing branched alkanes and copolymerized with monomers such as, but not limited to, propylene and polyethylene and Fischer-Tropsch type waxes. Polyethylene wax is not in the same category as polyethylene, a polymer of ethylene monomers.

Elastomer solvents (sometimes called elastomer plasticizers) vary the firmness of the gum base. Their specificity on elastomer inter-molecular chain breaking (plasticizing) along with their varying softening points cause varying degrees of finished gum firmness when used in base. This is also important when one wishes to provide more elastomeric chain exposure to the alkanic chains of the waxes. Elastomer solvents include natural rosin esters such as glycerol ester of partially hydrogenated rosin, glycerol ester of polymerized rosin, glycerol ester of partially dimerized rosin, glycerol ester of rosin, glycerol ester of tall oil rosin, pentaerythritol esters of partially hydrogenated rosin, partially hydrogenated methyl esters of rosin, pentaerythritol ester of rosin, synthetic elastomer plasticizers such as terpene resins derived from alpha- pinene, beta-pinene and/or d-limonene, and mixtures thereof. The elastomer solvents used may be of one type or of combinations of more than one. Typically, the ratios of one to the other are dependent on each respective softening point, on each effect on flavor release, and on each respective degree of tack they cause to the gum. Ball and ring softening points of the rosin ester types described above may range from about 60 to about 120°C. Softening points of the terpene resins may range from about 60 to about 130°C and an average molecular weight of from about 500 to 2,000. Occasionally, both terpene and rosin ester resins may be used together.

Softeners modify the texture, cause the hydrophobic and hydrophilic components of the base to be miscible, and may further plasticize the synthetic elastomers of the gum base. Softeners include fully hydrogenated oils of cottonseed, soybean, palm, palm kernel, coconut, safflower and the like, as well as monoglycerides, diglycerides, acetylated monoglycerides, distilled mono- and diglycerides and de-oiled or "powdered" lecithin. The glycerides and lecithin are sometimes referred to as emulsifiers.

Fillers used in gum base modify the texture of the gum base and aid in processing. Fillers include carbonate or precipitated carbonated types such as magnesium and calcium carbonate, ground limestone and silicate types such as magnesium and aluminum silicate, clay, alumina, talc, as well as titanium oxide, mono- di- and tricalcium phosphate, cellulose polymers such as ethyl, methyl and wood or mixtures thereof.

Other optional ingredients such as antioxidants and colorants may also be used in the gum base. Antioxidants prolong shelf-life and storage of gum base, finished gum or their respective components including fats and flavor oils. Antioxidants suitable for use in gum base or gum of the present invention include butylated hydroxyanisole (BHA), butylated hydroxytoluene (BHT), beta -carotenes, tocopherols, acidulants such as Vitamin C, propyl gallate, other synthetic and natural types or mixtures thereof in free-flowing ground or pulverized form.

**The** soluble portion of chewing gums is composed of flavoring agents (including sensates such as physiological cooling agents, warming agents and tingling agents), bulking agents (also called bulk sweeteners), high intensity sweeteners, colors, acidulants, fillers, emulsifiers, water soluble softening agents and binders.

High-intensity artificial sweeteners can also be used, alone or in combination, with the above. Preferred sweeteners include, but are not limited to, sucralose, aspartame, N-substituted APM derivatives such as neotame, salts of acesulfame, alitame, saccharin and its salts, cyclamic acid and its salts, glycyrrhizin, dihydrochalcones, thaumatin, monellin, stevia and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

A variety of flavoring agents can also be used, if desired. The flavor can be used in amounts of about 0.1 to about 15 weight percent of the gum, and preferably, about 0.2% to about 5% by weight. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion. Included in the general category of flavors are sensates, chemicals which impart physiological sensations in the mouth such as cooling agents, warming agents and tingling agents. Examples of cooling agents include menthol, WS-23, WS-3, WS-5, isopulegol, esters of menthol such as menthyl succinate, menthyl lactate and menthyl glutarate, among others. Warming and tingling agents include capsaicin, piperine, jambu and spilanthol.

### EXAMPLES

### Examples 1 - 3

Chewing gum samples were made according to the formulas in Table 1 and the following process.

| Table 1 | | | |
|---|---|---|---|
| | Example 1 | Example 2 | Example 3 |
| Sorbitol | 22.21 | 22.72 | 23.02 |
| Xylitol | 44.57 | 45.44 | 45.68 |
| Mannitol | 3.20 | | |
| Gum Base | 26.90 | 24.39 | 24.39 |
| Free and encapsulated high intensity sweeteners | 2.20 | 2.86 | 2.35 |
| HIS | 0.17 | | |
| HIS | 0.29 | | |
| Food acid | | | 0.70 |
| Glycerin | 0.97 | 1.00 | 1.00 |
| Acetylated mono-glycerides | 0.77 | 0.80 | 0.80 |
| Mono-glycerides | | 0.20 | |
| Peppermint flavor | 2.17 | | |
| Spearmint flavor | | 2.57 | |
| Strawberry flavor | | | 2.00 |
| Color | | 0.02 | 0.06 |
| | 100.00 | 100.00 | 100.00 |

The gum base was heated in an oven at 70°C. Once melted, the gum base, powdered sugar alcohols, softeners and humectant were mixed in a Sigma Blade mixer at 55-60°C until a gum dough was formed. Flavors, high intensity sweeteners and antioxidant were added and mixed until homogeneous, about 14 minutes total. The mixed gum was removed from the mixer. The gum may be optionally sheeted or pelletized at this point. The gum at about 55°C is introduced into a six zone Clextral BC21 extruder with zone temperature settings according to Table 2.

| Table 2 | | | | | | | | | |
|---|---|---|---|---|---|---|---|---|---|
| | Processing temperature (°C) | | | | | | | | SPEED |
| | Zone 1 | Zone 2 | Zone 3 | Zone 4 | Zone 5 | Zone 6 | Zone 7 | Mold | RPM |
| Ex. 3 | 50 | 55 | 110 | 110 | 110 | 105 | 95 | 77 | 98 |
| Ex. 2 | 50 | 55 | 95 | 95 | 95 | 95 | 95 | 77 | 98 |
| Ex. 1 | 50 | 55 | 95 | 95 | 95 | 95 | 95 | 77 | 98 |

The molten gum was deposited into both silicone molds and PVC blister sheets. Samples in the silicone mold were place inside High Barrier Overwrap (HBO) bags, while the PVC blister was sealed with aluminum foil.

The samples were then aged under three conditions: Refrigerator (3-10°C), ambient environment (20-23°C, 20%RH), and oven (26-28°C, 44%RH). Samples were pulled at 1, 2, 7, 9, 12, 15, and 30 days for DSC and TMA testing.

### Melting point and crystallinity measurement

A Discovery DSC (Differential Scanning Calorimetry) System was operated used to test the samples under the following process:
Sample pan and lid: Tzero pans and Hermetic lids;
Heating rate: 20°C/min;
Cycle: heating-cooling-heating;
Temperature range: -85°C to 180°C 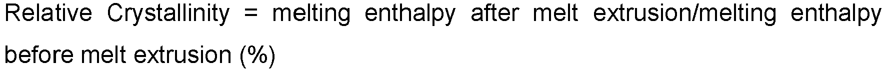 Relative Crystallinity = melting enthalpy after melt extrusion/melting enthalpy before melt extrusion (%)

### Crust thickness measurement

A Mettler Toledo TMA/SDTA 2+ with intracooler temperature control as used to measure crust thickness according to the following procedure.

**A** sample was cut sample in half and a mini wooden spatula was used to carefully remove the soft center portion. The remaining firm crust was cut into a 2x2mm square. The instrument was operated in isothermal creep test mode at 25°C, 0.02N Load for 5 minutes. This is essentially a method to precisely measure crust thickness.

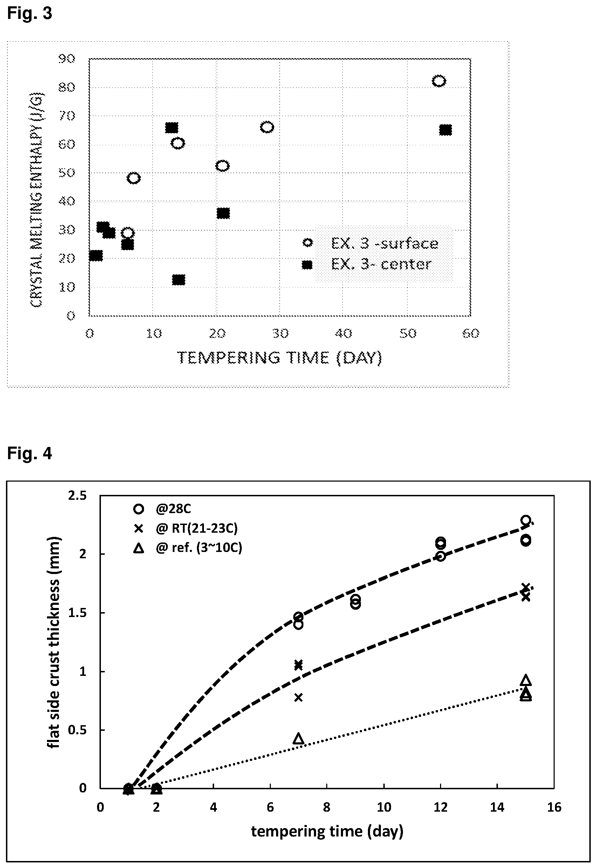

Enthalpy results for Example 3 tempering at ambient conditions (20-22°C) are shown in Figure 3. The center material and surface material were tested separately to show faster crystallization at the surface (where the crust begins to form) and the center (which crystallizes last.).

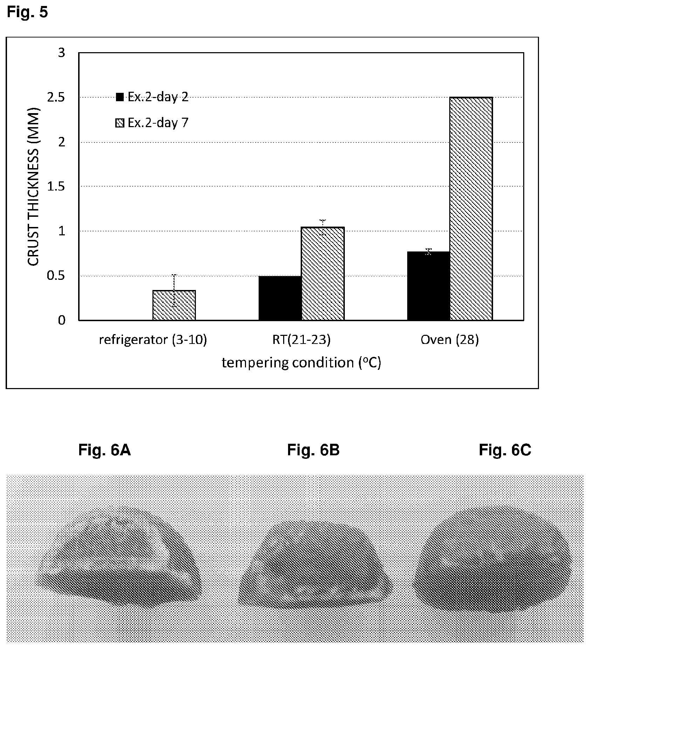

TMA measurements of crust thickness of Example 3 are shown in Table 3. As can be seen, the crust thickness was grew 33% faster with heat treatment at 26-28°C compared to ambient tempering. Photos of the tempered samples (Figure 6A-C) show the heat treated sample as being essentially completely tempered while the other two samples tempered at refrigerator and ambient conditions are only partially tempered.

| Table 3 | | |
|---|---|---|
| Tempering condition | Crust thickness (mm) (curved side) | Cross section photo |
| Refrigerator (3-10°C), 7 days | 0.22+/-0.03 | Fig. 6A |
| Ambient (20-22°C), 7 days | 0.96+/-0.16 | Fig. 6B |
| Oven (26-28°C), 7 days | 1.28+/-0.25 | Fig. 6C |

Crust thickness of Example 1 measured by TMA are shown in Table 4. The samples tempered at refrigerator and ambient conditions for 15 days were demolded with the results described in Table 4. The heat tempered product was demolded at 7 days, but had a thicker crust and no deformation from molding. These results indicate that heat tempering reduced tempering time by more than 50%.

| Table 4 | | |
|---|---|---|
| Tempering condition | Crust thickness (mm) (curve side) | Dimensional stability after release from blister |
| Refrigerator (3-10°C) 15 days | 0.674+/-0.03 | Can be pushed out, but shape distorted, some residue |
| Ambient (20-22°C) 15 days | 1.12+/-0.08 | Can be pushed out w/o shape deformation, but small surface cracks, no residue |
| Oven (26-28°C) 7 days | 1.82+/-0.05 | Can be pushed out w/o shape deformation, no surface cracks, no residue |

### Example 4 - Surface tension effect

Molten gum samples were deposited on molds made from silicone rubber, polyethylene terephthalate (PET), and aluminum, respectively. All samples were tempered at ambient conditions (20-23C, 20~40%RH) for a certain period of time, as specified in Table 5. The sample in the silicone mold formed a crust that was thicker than the crust formed on the sample in the PET mold, and the crust formed on the sample in the PET mold was thicker than the crust formed on the sample in the aluminum dish. The sample in the aluminum dish remained sticky and could not be demolded.

| Table 5 | | |
|---|---|---|
| Sample conditions | Material contacted | Surface energy* |
| Ambient (22-23C, 20~40%RH), 2.5 month | Silicone mold (curve side) | 18.4∼24.4 mN/m |
| | Air (flat side) | |
| | PET (curve side) | 34~44 mN/m |
| | Air (flat side) | |
| | Aluminum dish | 850 mN/m |

| | | |
|---|---|---|
| *Literature data, Van Krevelen, D. W. & Nijenhuis, K. te. *properties of polymers.* Page 235. (Elsevier, 2009); Mark, J. *Physical properties of polymers handbook.* Page 670 (AIP Press, 1996). | | |

To shorten the tempering time, low surface tension material (for example, less than 35 mN/m, less than 30 mN/m, or less than 25 mN/m) is preferred to be used as the molding device or the coating layer on the surface of the molding device. These materials include but are not limited to aliphatic hydrocarbon polymers or oligomers, aliphatic polyesters or polyethers, silicone, fluoropolymers, such as polytetrafluroethylene, polypropylene, polyethylene, polydimethylsiloxane, polyoxyisobutylene, polyoxypropylene, and poly(vinyl octanoate).

## Claims

1. A method of producing a chewing gum product comprising the steps of;
a. preparing a chewing gum composition comprising at least a gum base, a flavor and at least two sugar alcohols,
b. melting and holding the chewing gum composition at a temperature sufficient to allow depositing the chewing gum composition,
c. depositing the molten chewing gum composition, wherein the surface onto which the molten chewing gum composition is deposited is a mold,
d. heat tempering the deposited chewing gum composition in the mold at a temperature of at least 25°C for a total tempering time that is reduced by at least 20% compared to tempering at 20°C, wherein the heat tempering is for at least 4 hours.

2. The method of claim 1, wherein the total tempering time is reduced by at least 30%, or at least 40%, or at least 50%, or reduced by at least 60% compared to tempering at 20°C.

3. The method of claim 1, wherein the total tempering time is less than 24 hours.

4. The method of any preceding claim, wherein the chewing gum composition is heat tempered at a temperature of at least 30°C, or at least 35°C, or wherein the chewing gum composition is heat tempered at a temperature of at least 40°C.

5. The method of any preceding claim wherein the tempering occurs at a relative humidity of less than 50%, or less than 35%, or wherein the tempering occurs at a relative humidity of less than 20%.

6. The method of any preceding claim wherein the chewing gum composition is heat tempered for at least 6 hours, or at least 8 hours, or at least 12 hours, or at least 24 hours, or wherein the chewing gum composition is heat tempered for at least 7 days.

7. The method of any preceding claim wherein the chewing gum composition comprises two sugar alcohols, optionally wherein the chewing gum composition comprises three sugar alcohols.

8. The method of any preceding claim wherein the chewing gum composition comprises at least one alcohol selected from the group consisting of sorbitol, maltitol, xylitol, mannitol, erythritol, isomalt and combinations thereof, and optionally wherein the chewing gum composition comprises a sugar alcohol blend which is
A) a binary blend of xylitol and sorbitol, or
B) a binary blend of xylitol and isomalt, or
C) a binary blend of sorbitol and isomalt.

9. The method of any preceding claim wherein two sugar alcohols are present in a ratio in the range of 1:9 to 9:1, optionally wherein two sugar alcohols are present in a ratio in the range of 1:3 to 3:1, and even further optionally wherein two sugar alcohols are present in a ratio in the range of 1:2 to 2:1

10. The method of any preceding claim, wherein the mold into which the chewing gum composition is deposited is part of the consumer packaging.

11. The method of any preceding claim, wherein the mold into which the chewing gum composition is deposited is the blister of a blister pack.

12. The method of any preceding claim wherein the chewing gum composition comprises at least one ingredient selected from the group consisting of high intensity sweeteners, encapsulated high intensity sweeteners, colors, emulsifiers, fillers, nutritional supplements and combinations thereof.

## Patentansprüche

1. Verfahren zum Herstellen eines Kaugummiprodukts, aufweisend die folgenden Schritte:
a. Vorbereiten einer Kaugummizusammensetzung, aufweisend mindestens eine Kaugummirohmasse, ein Aroma und mindestens zwei Zuckeralkohole,
b. Schmelzen und Halten der Kaugummizusammensetzung auf einer Temperatur, die ausreicht, um das Ablagern der Kaugummizusammensetzung zu ermöglichen,
c. Ablagern der geschmolzenen Kaugummizusammensetzung, wobei die Oberfläche, auf der die geschmolzene Kaugummizusammensetzung abgelagert wird, eine Form ist,
d. Wärmetemperieren der abgelagerten Kaugummizusammensetzung in der Form bei einer Temperatur von mindestens 25 °C über eine Gesamttemperierzeit, die im Vergleich zum Temperieren bei 20 °C um mindestens 20 % verkürzt ist, wobei das Wärmetemperieren mindestens 4 Stunden dauert.

2. Verfahren nach Anspruch 1, wobei die Gesamttemperierzeit um mindestens 30 % oder mindestens 40 % oder mindestens 50 % oder mindestens 60 % im Vergleich zum Temperieren bei 20 °C verringert wird.

3. Verfahren nach Anspruch 1, wobei die Gesamttemperierzeit weniger als 24 Stunden beträgt.

4. Verfahren nach einem der vorhergehenden Ansprüche, wobei die Kaugummizusammensetzung bei einer Temperatur von mindestens 30 °C oder mindestens 35 °C wärmetemperiert wird oder wobei die Kaugummizusammensetzung bei einer Temperatur von mindestens 40 °C wärmetemperiert wird.

5. Verfahren nach einem der vorhergehenden Ansprüche, wobei das Temperieren bei einer relativen Feuchtigkeit von weniger als 50 % oder weniger als 35 % erfolgt, oder wobei das Temperieren bei einer relativen Feuchtigkeit von weniger als 20 % erfolgt.

6. Verfahren nach einem der vorhergehenden Ansprüche, wobei die Kaugummizusammensetzung mindestens 6 Stunden, mindestens 8 Stunden, mindestens 12 Stunden oder mindestens 24 Stunden lang wärmetemperiert wird oder wobei die Kaugummizusammensetzung mindestens 7 Tage lang wärmetemperiert wird.

7. Verfahren nach einem der vorhergehenden Ansprüche, wobei die Kaugummizusammensetzung zwei Zuckeralkohole aufweist, wobei die Kaugummizusammensetzung optional drei Zuckeralkohole aufweist.

8. Verfahren nach einem der vorhergehenden Ansprüche, wobei die Kaugummizusammensetzung mindestens einen Zuckeralkohol aufweist, der aus der Gruppe bestehend aus Sorbit, Maltit, Xylit, Mannit, Erythrit, Isomalt und Kombinationen davon ausgewählt ist, und wobei die Kaugummizusammensetzung optional eine Zuckeralkoholmischung aufweist, die
A) eine binäre Mischung aus Xylit und Sorbit oder
B) eine binäre Mischung aus Xylit und Isomalt oder
C) eine binäre Mischung aus Sorbitol und Isomalt ist.

9. Verfahren nach einem der vorhergehenden Ansprüche, wobei zwei Zuckeralkohole in einem Verhältnis im Bereich von 1:9 bis 9:1 vorhanden sind, wobei optional zwei Zuckeralkohole in einem Verhältnis im Bereich von 1:3 bis 3:1 vorhanden sind und wobei ferner optional zwei Zuckeralkohole in einem Verhältnis im Bereich von 1:2 bis 2:1 vorhanden sind.

10. Verfahren nach einem der vorhergehenden Ansprüche, wobei die Form, in der die Kaugummizusammensetzung abgelagert wird, Teil der Verbraucherverpackung ist.

11. Verfahren nach einem der vorhergehenden Ansprüche, wobei die Form, in der die Kaugummizusammensetzung abgelagert wird, der Blister einer Blisterverpackung ist.

12. Verfahren nach einem der vorhergehenden Ansprüche, wobei die Kaugummizusammensetzung mindestens einen Bestandteil umfasst, der aus der Gruppe bestehend aus hochintensiven Süßstoffen, eingekapselten hochintensiven Süßstoffen, Farben, Emulgatoren, Füllstoffen, Nahrungsergänzungsmitteln und Kombinationen davon ausgewählt ist.

## Revendications

1. Procédé de production d'un produit de gomme à mâcher comprenant les étapes suivantes ;
a. la préparation d'une composition de gomme à mâcher comprenant au moins une base de gomme, un arôme et au moins deux alcools de sucre,
b. la fusion et le maintien de la composition de gomme à mâcher à une température suffisante pour permettre le dépôt de la composition de gomme à mâcher,
c. le dépôt de la composition de gomme à mâcher fondue, dans lequel la surface sur laquelle la composition de gomme à mâcher fondue est déposée est un moule,
d. le tempérage thermique de la composition de gomme à mâcher déposée dans le moule à une température d'au moins 25 °C pendant un temps de tempérage total qui est réduit d'au moins 20 % comparativement à un tempérage à 20 °C, dans lequel le tempérage thermique dure au moins 4 heures.

2. Procédé selon la revendication 1, dans lequel le temps de tempérage total est réduit d'au moins 30 %, ou d'au moins 40 %, ou d'au moins 50 %, ou réduit d'au moins 60 % comparativement à un tempérage à 20 °C.

3. Procédé selon la revendication 1, dans lequel le temps de tempérage total est inférieur à 24 heures.

4. Procédé selon une quelconque revendication précédente, dans lequel la composition de gomme à mâcher est soumise à un tempérage thermique à une température d'au moins 30 °C, ou d'au moins 35 °C, ou dans lequel la composition de gomme à mâcher est soumise à un tempérage thermique à une température d'au moins 40 °C.

5. Procédé selon une quelconque revendication précédente, dans lequel le tempérage a lieu à une humidité relative inférieure à 50 %, ou inférieure à 35 %, ou dans lequel le tempérage a lieu à une humidité relative inférieure à 20 %.

6. Procédé selon une quelconque revendication précédente, dans lequel la composition de gomme à mâcher est soumise à un tempérage thermique pendant au moins 6 heures, ou au moins 8 heures, ou au moins 12 heures, ou au moins 24 heures, ou dans lequel la composition de gomme à mâcher est soumise à un tempérage thermique pendant au moins 7 jours.

7. Procédé selon une quelconque revendication précédente, dans lequel la composition de gomme à mâcher comprend deux alcools de sucre, facultativement dans lequel la composition de gomme à mâcher comprend trois alcools de sucre.

8. Procédé selon une quelconque revendication précédente, dans lequel la composition de gomme à mâcher comprend au moins un alcool choisi dans le groupe constitué par le sorbitol, le maltitol, le xylitol, le mannitol, l'érythritol, l'isomalt et des combinaisons de ceux-ci, et facultativement dans lequel la composition de gomme à mâcher comprend un mélange d'alcool de sucre qui est
A) un mélange binaire de xylitol et de sorbitol, ou
B) un mélange binaire de xylitol et d'isomalt, ou
C) un mélange binaire de sorbitol et d'isomalt.

9. Procédé selon une quelconque revendication précédente, dans lequel deux alcools de sucre sont présents selon un rapport dans la plage de 1:9 à 9:1, facultativement dans lequel deux alcools de sucre sont présents selon un rapport dans la plage de 1:3 à 3:1, et encore plus facultativement dans lequel deux alcools de sucre sont présents selon un rapport dans la plage de 1:2 à 2:1

10. Procédé selon une quelconque revendication précédente, dans lequel le moule dans lequel la composition de gomme à mâcher est déposée fait partie de l'emballage destiné au consommateur.

11. Procédé selon une quelconque revendication précédente, dans lequel le moule dans lequel la composition de gomme à mâcher est déposée est le blister d'un emballage-coque.

12. Procédé selon une quelconque revendication précédente, dans lequel la composition de gomme à mâcher comprend au moins un ingrédient choisi dans le groupe constitué par les édulcorants intenses, les édulcorants intenses encapsulés, les colorants, les émulsifiants, les charges, les suppléments nutritionnels et des combinaisons de ceux-ci.
